# EUROPEAN PATENT APPLICATION

(11) **EP 4 847 678 A1**
(43) Date of publication of application: **02.12.2026**
(21) Application number: 25745157.5
(22) Date of filing: 22.01.2025
(51) Int. Cl.: D05B 19/02

(54) **SEWING MANAGEMENT SYSTEM**

(30) Priority: 24.01.2024 JP 2024008468
(71) Applicant: JUKI Corporation, Tama-shi, Tokyo 206-8551 (JP)
(72) Inventor: FUJIMOTO, Mio, Tama-shi, Tokyo 206-8551 (JP); OKAMURA, Masahiko, Tama-shi, Tokyo 206-8551 (JP)
(74) Representative: Hoeger, Stellrecht & Partner Patentanwälte mbB
(86) International application number: PCT/JP2025/001880
(87) International publication number: WO 2025/159116

(57) **Abstract**

The sewing management system (1) includes a sewing machine (2) and a management device (3) that manages the sewing machine (2), and the management device (3) includes an information acquisition unit (11) that acquires, from the sewing machine (2), operation information (31) for calculating a basic processing time (BPT), a setting unit (12) that receives settings for an allowance rate (AR) with respect to the basic processing time (BPT) and for standard allotted minutes (SAM), a calculation unit (13) that calculates the basic processing time (BPT) and an allowance time (AT) based on the operation information (31) and the allowance rate (AR), and an output unit (14) that outputs the standard allotted minutes (SAM) and an actual standard time (AST), which is the sum of the basic processing time (BPT) and the allowance time (AT).

## Description

### TECHNICAL FIELD

The present invention relates to a sewing management system.

### BACKGROUND ART

In the technical field related to sewing machine, a sewing management system as disclosed in Patent Literature 1 is known. In Patent Literature 1, a production target rate, which is the number of workpieces produced per predetermined time, can be set.

### CITATION LIST

### PATENT LITERATURE

Patent Literature 1: JP2016-214511A

### SUMMARY OF INVENTION

### TECHNICAL PROBLEM

In production management of the workpiece, standard allotted minutes (SAM) are set. The standard allotted minutes serves as an index for evaluating productivity by comparison with actual processing-time results in a sewing factory or the like. In a sewing management system, it is desired to easily compare the standard allotted minutes with the actual value.

An object of the present disclosure is to provide a sewing management system that can easily compare standard allotted minutes with an actual value.

### SOLUTION TO PROBLEM

According to an aspect of the present disclosure, there is provided a sewing management system that manages production of a workpiece using a sewing machine, the sewing management system including: the sewing machine; and a management device configured to manage the sewing machine, in which the management device includes an information acquisition unit configured to acquire operation information for calculating a basic processing time from the sewing machine, a setting unit configured to receive settings for an allowance rate with respect to the basic processing time and for standard allotted minutes, a calculation unit configured to calculate the basic processing time and an allowance time based on the operation information and the allowance rate, and an output unit configured to output the standard allotted minutes and an actual standard time, which is a sum of the basic processing time and the allowance time.

### ADVANTAGEOUS EFFECTS OF INVENTION

According to an aspect of the present disclosure, the sewing management system that can easily compare the standard allotted minutes with the actual value is provided.

### BRIEF DESCRIPTION OF DRAWINGS

[FIG. 1] FIG. 1 is a diagram schematically illustrating a sewing management system according to an embodiment.
[FIG. 2] FIG. 2 is a block diagram illustrating a management device according to the embodiment.
[FIG. 3] FIG. 3 is a block diagram illustrating a configuration related to control of a sewing machine according to the embodiment.
[FIG. 4] FIG. 4 is a schematic diagram illustrating an example of a performance screen according to the embodiment.
[FIG. 5] FIG. 5 is a diagram illustrating display modes of the performance screen.
[FIG. 6] FIG. 6 is a diagram illustrating a setting screen of an allowance rate and standard allotted minutes.
[FIG. 7] FIG. 7 is a diagram illustrating a setting display screen that displays setting contents for each process.
[FIG. 8] FIG. 8 is a graph for illustrating a method of calculating a basic processing time.
[FIG. 9] FIG. 9 is a flowchart illustrating an operation of the management device according to the embodiment.

### DESCRIPTION OF EMBODIMENTS

Hereinafter, an embodiment according to the present technique will be described with reference to the drawings, but the present technique is not limited to the embodiment. Components of the embodiment described below can be appropriately combined. A part of the components may not be used.

### [Sewing Management System]

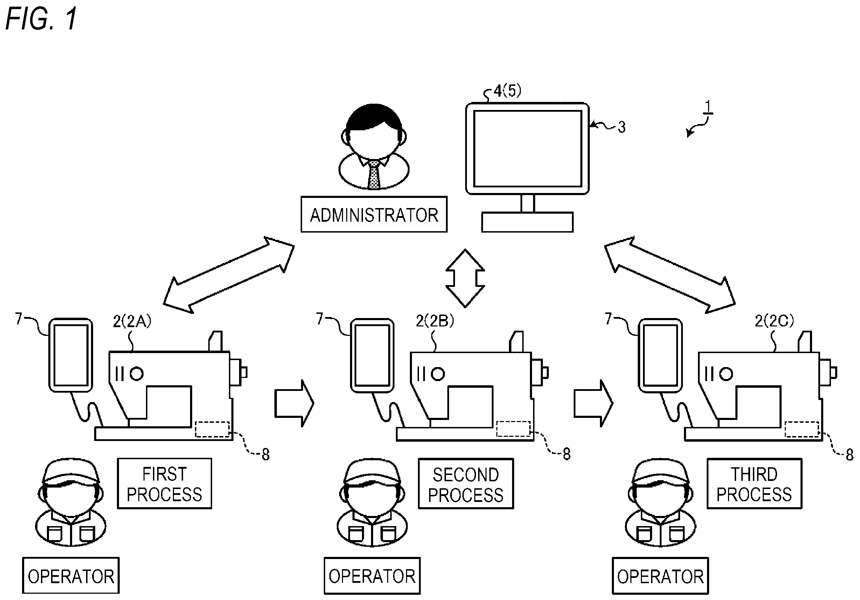

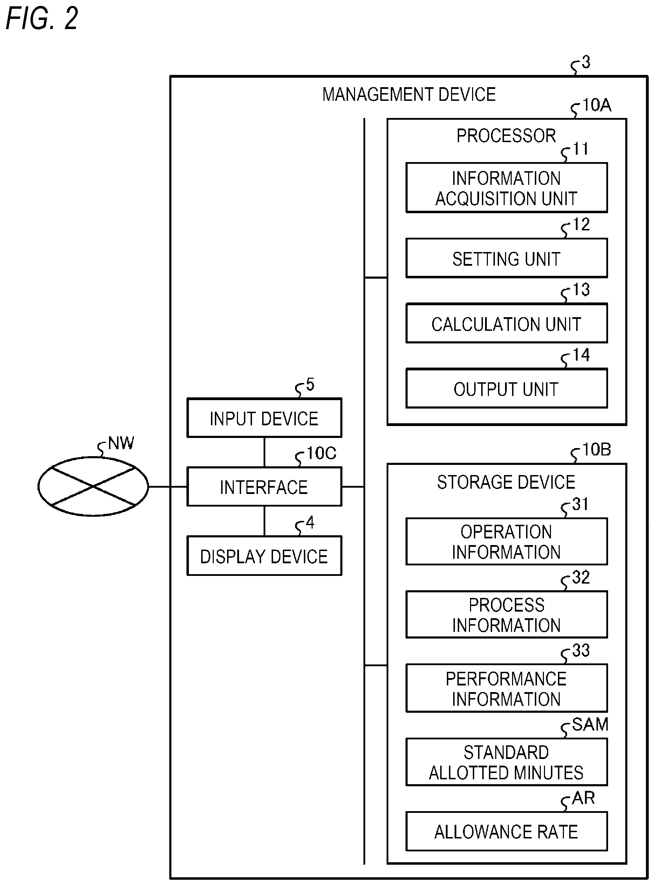

FIG. 1 is a diagram schematically illustrating a sewing management system 1 according to the embodiment. FIG. 2 is a block diagram illustrating a management device 3 according to the embodiment. The sewing management system 1 is a system that manages production of a workpiece using sewing machines 2. The sewing management system 1 includes the sewing machines 2 and a management device 3 that manages the sewing machines 2. Each of the sewing machines 2 is installed in a sewing factory. The sewing machine 2 operates in the sewing factory. The sewing machine 2 is an industrial sewing machine. The plurality of sewing machines 2 are installed in the sewing factory. The sewing machine 2 sews a sewing object with threads, thereby producing a sewn product. Examples of the sewing object include fabric. Examples of the sewn product include clothes. The management device 3 is installed in the same facility as the facility in which the sewing machine 2 is installed. That is, the management device 3 is installed in the sewing factory.

In the sewing factory, the sewn product is produced by the plurality of sewing machines 2. In the sewing factory, a plurality of types of sewing machines 2 corresponding to applications are installed. In the sewing factory, the plurality of types of sewing machines 2 are installed to correspond to a plurality of processes for producing the sewn product. Examples of the types of the sewing machines 2 include a lockstitch sewing machine for sewing a body part, a button sewing machine for attaching a button to the body part, and a pocket sewing machine for attaching a pocket to the body part. In one sewing factory, many sewing machines 2 of various types are installed. In order to simplify the description, three sewing machines 2 are illustrated in FIG. 1. A first sewing machine 2A is used in a first process for producing the sewn product. A second sewing machine 2B is used in a second process for producing the sewn product. A third sewing machine 2C is used in a third process for producing the sewn product. In the sewing factory, a plurality of sewing machines 2 of one type may be installed.

In the sewing factory, an administrator and an operator work. The administrator manages the operator and the sewing machines 2. The operator operates the sewing machines 2 to perform sewing processing. The administrator and the operator are users of the sewing machines 2. There may be one or a plurality of administrators. There may be one or a plurality of operators. For example, one operator may operate a plurality of sewing machines 2.

The management device 3 includes a display device 4 and an input device 5. The display device 4 displays display data. The display device 4 includes a flat panel display such as a liquid crystal display or an organic EL display. The input device 5 is operated by the administrator to generate input data. The input device 5 may be operated by the operator. The input device 5 includes a touch panel (touch sensor) disposed on a display screen of the display device 4. The input device 5 may be a computer keyboard, a mouse, or a voice input device.

The sewing machine 2 includes an operation panel 7 and a control device 8. The operation panel 7 includes a display device, an operation device, and a microcomputer. The display device includes a flat panel display such as a liquid crystal display or an organic EL display. The operation device includes a touch panel (touch sensor) disposed on a display screen of the display device. The microcomputer includes at least one processor and a main memory that stores a computer program executable by the processor. The operation panel 7 receives an input operation when the operator or the administrator inputs settings and the like to the control device 8 of the sewing machine 2, and displays information related to control of the sewing machine 2.

The control device 8 includes a computer system. The control device 8 includes at least one processor and a main memory that stores a computer program executable by the processor. The control device 8 receives operation data generated by operating the operation panel 7 connected to the control device 8, and controls the sewing machine 2.

The management device 3 is shared by the plurality of sewing machines 2 in the sewing factory. The number of management devices 3 is less than the number of sewing machines 2. The management device 3 can communicate with each of the plurality of sewing machines 2. The management device 3 of the management device 3 communicates with the control device 8 of the sewing machine 2. The management device 3 and the control device 8 communicate with each other in a wired or wireless manner via a network NW (see FIG. 2). For example, the management device 3 and the control device 8 communicate with each other in a wireless manner via a network NW such as a local area network (LAN). Examples of the wireless LAN include Wi-Fi (registered trademark).

The management device 3 manages a production performance of the workpiece by the sewing machine 2. The management device 3 can output statistical information calculated from the production performance. The manager can evaluate a production status and the productivity in the sewing factory by the information output from the management device 3, and can utilize an evaluation result for a factory operation.

The management device 3 collects operation information 31 (see FIG. 2) of each of the plurality of sewing machines 2. The management device 3 calculates performance information 33 indicating the production performance of the workpiece from the operation information 31 of each of the plurality of sewing machines 2 and displays the performance information 33 on the display device 4. The performance information 33 includes a basic processing time BPT, an allowance time AT, and an actual standard time AST to be described later.

### (Configuration of Management Device)

As illustrated in FIG. 2, the management device 3 includes a computer system. The management device 3 includes at least one processor 10A, a storage device 10B that stores a computer program executable by the processor 10A, and an interface 10C for the processor 10A to communicate with various devices. The processor 10A is a calculation element such as a central processing unit (CPU). The storage device 10B includes a main memory including a nonvolatile memory such as a read only memory (ROM) and a volatile memory such as a random access memory (RAM), and a storage such as a hard disk drive or a solid state drive. The interface 10C includes an input and output circuit that inputs and outputs signals to and from the display device 4 and the input device 5, and a communication controller that communicates with the control device 8 of each sewing machine 2 via the network NW.

The management device 3 includes an information acquisition unit 11, a setting unit 12, a calculation unit 13, and an output unit 14. The information acquisition unit 11, the setting unit 12, the calculation unit 13, and the output unit 14 are functional blocks implemented on a program when the processor 10A executes the program stored in the storage device 10B. That is, the processor 10A functions as the information acquisition unit 11, the setting unit 12, the calculation unit 13, and the output unit 14 by executing the program.

The information acquisition unit 11 acquires the operation information 31 for calculating the basic processing time BPT from the sewing machine 2. The information acquisition unit 11 acquires the operation information 31 from each sewing machine 2 by communication via the interface 10C and the network NW. The operation information 31 of the sewing machine 2 includes, for example, input data of an operation switch 6 to be described later and operation data of a thread cutting mechanism.

The setting unit 12 receives settings for an allowance rate AR with respect to the basic processing time BPT and for standard allotted minutes SAM. The setting unit 12 receives the settings for the allowance rate AR and the standard allotted minutes SAM via the input device 5. The setting unit 12 receives, via the input device 5, the setting for process information 32 indicating the process to be executed by each sewing machine 2. In the example of FIG. 1, the process information 32 includes a first process, a second process, and a third process. Each process set by the setting unit 12 is assigned to the sewing machine 2 that executes the process. For example, in the example of FIG. 1, the first process is assigned to the first sewing machine 2A, the second process is assigned to the second sewing machine 2B, and the third process is assigned to the third sewing machine 2C. The administrator inputs setting values of the allowance rate AR and the standard allotted minutes SAM and the content of the process information 32 using the input device 5.

The calculation unit 13 generates the performance information 33 for managing the production performance of the workpiece based on the operation information 31. Specifically, the calculation unit 13 calculates the basic processing time BPT and the allowance time AT based on the operation information 31 and the allowance rate AR. The calculation unit 13 calculates the actual standard time AST from the basic processing time BPT and the allowance time AT.

The output unit 14 outputs information generated by the calculation unit 13 and information set in the setting unit 12. The output unit 14 outputs a display screen of various types of information to the display device 4 via the interface 10C. Specifically, the output unit 14 outputs the standard allotted minutes SAM and the actual standard time AST, which is the sum of the basic processing time BPT and the allowance time AT.

The storage device 10B stores a program executed by the processor 10A, information acquired by the information acquisition unit 11, and setting information for the setting unit 12. The storage device 10B stores the operation information 31 of each sewing machine 2, the process information 32 of each sewing machine 2, the performance information 33 of each sewing machine 2, and the setting information of the standard allotted minutes SAM and the allowance rate AR.

### (Configuration of Sewing Machine)

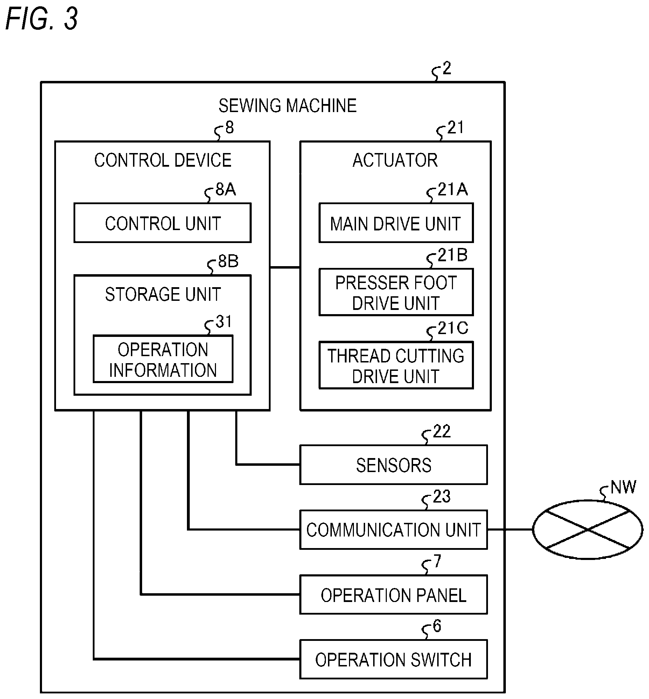

FIG. 3 is a block diagram illustrating a configuration related to control of the sewing machine 2 according to the embodiment. Since a mechanical configuration (structure) of the sewing machine 2 is similar to that of a known sewing machine, the description thereof will be omitted. The sewing machine 2 includes a control device 8, an actuator 21, sensors 22, a communication unit 23, an operation panel 7, and an operation switch 6.

The control device 8 outputs a control signal for controlling the sewing machine 2. The control device 8 includes a computer system. That is, the control device 8 includes a control unit 8A including a processor such as a CPU, and a storage unit 8B including storage devices such as a read only memory (ROM) and a random access memory (RAM). The storage unit 8B stores a program for causing the processor to function as the control unit 8A. The storage unit 8B stores the operation information 31 acquired from the actuator 21, the sensors 22, the operation switch 6, and the like. Further, the storage unit 8B stores setting data and the like input from the operation panel 7.

The control device 8 transmits the setting data of the sewing machine 2 and the operation information 31 of the sewing machine 2 to the management device 3 via the communication unit 23. The setting data of the sewing machines 2 includes information for identifying the processes (the first process, the second process, the third process, and the like) to be executed by the sewing machines 2, and setting values of operating conditions of the sewing machines 2.

The actuator 21 includes a main drive unit 21A, a presser drive unit 21B, a thread cutting drive unit 21C, and the like. These drive units include actuators such as an electric motor and a solenoid. The main drive unit 21A is a main drive source of the sewing machine 2 for performing reciprocating drive of a needle bar, rotation of a shuttle, a feeding operation of the sewing machine 2, and the like. The presser drive unit 21B is a drive source for operating a presser foot mechanism of the sewing machine 2. The thread cutting drive unit 21C is a drive source for operating a thread cutting mechanism of the sewing machine 2. The thread cutting mechanism cuts off the thread from the workpiece set on the sewing machine 2 at a timing that marks the end of sewing work performed by the sewing machine 2.

The sensors 22 may include, for example, a drive amount sensor that detects a drive amount of the main drive unit 21A, a sensor that detects a drive amount of the presser drive unit 21B, a sensor that detects a drive amount of the thread cutting drive unit 21C, and a sensor that detects an operation of another movable part. The sensor includes an encoder that detects a rotation amount of the motor, a position sensor that detects a displacement of a movable member, and the like. Detection data of these sensors 22 is output to the control device 8.

The operation switch 6 receives an operation input associated with the sewing work performed by the sewing machine 2. When the operation switch 6 is operated by the operator, the sewing machine 2 operates. For example, the operator inputs the operation switch 6 at a timing when one sewing process is completed.

The operation panel 7 receives selection of a process to be executed by the sewing machine 2 and selection of setting data for sewing work to be executed in the selected process. The administrator or the operator uses the operation panel 7 to select the process to be executed by the sewing machine 2 from the process information 32 set by the management device 3. As a result, for example, in the example of FIG. 1, the first sewing machine 2A, the second sewing machine 2B, and the third sewing machine 2C are assigned to the first process, the second process, and the third process, respectively.

The communication unit 23 includes a network controller for connecting the control device 8 to the network NW. The control device 8 communicates with the management device 3 via the communication unit 23 and the network NW. The control device 8 transmits the input data of the operation switch 6 and the operation data of the thread cutting mechanism to the management device 3 as the operation information 31. The input data of the operation switch 6 is, for example, log data in which an input time of the operation switch 6 is recorded. The operation data of the thread cutting mechanism is log data in which an operation time of the thread cutting drive unit 21C is recorded.

As described above, the operation information 31 includes the input time of the operation switch 6. The operator inputs the operation switch 6 at the timing when one sewing process is completed. Therefore, the time (processing time) taken to complete one process (process for one workpiece) can be acquired from the time from when the operation switch 6 is input once to when the operation switch 6 is input next.

The operation information 31 includes an operation time of the thread cutting drive unit 21C. The number of times of thread cutting executed during the process is determined according to the content of the process executed by the sewing machine 2. Therefore, when the number of times of thread cutting executed in one process is N times, it is possible to acquire the time (processing time) taken to complete one process (process for one workpiece) from the time from the first operation time to the (N + 1)-th operation time of the thread cutting drive unit 21C.

Therefore, the calculation unit 13 of the management device 3 calculates the processing time as described above based on the operation information 31 acquired from each sewing machine 2. The basic processing time BPT is calculated from the data of the obtained processing time by processing to be described later.

### (Processing of Management Device 3)

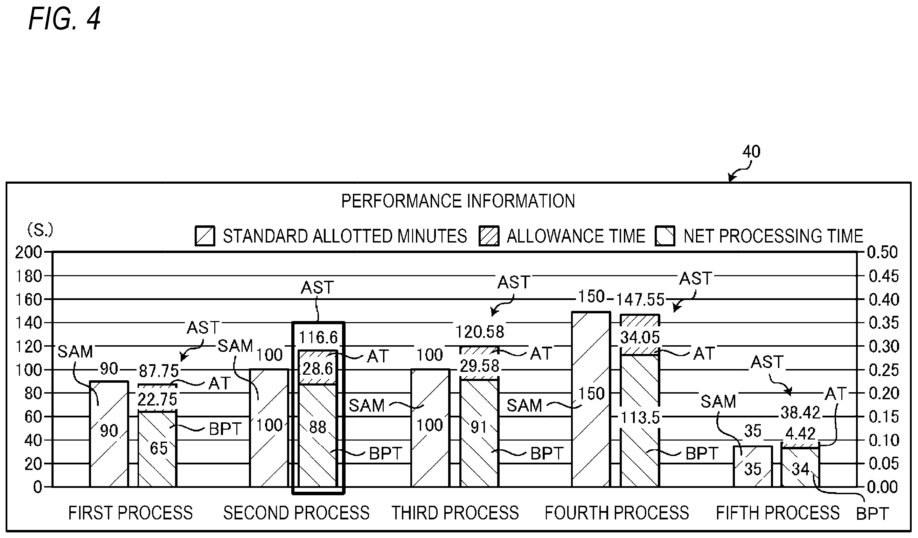

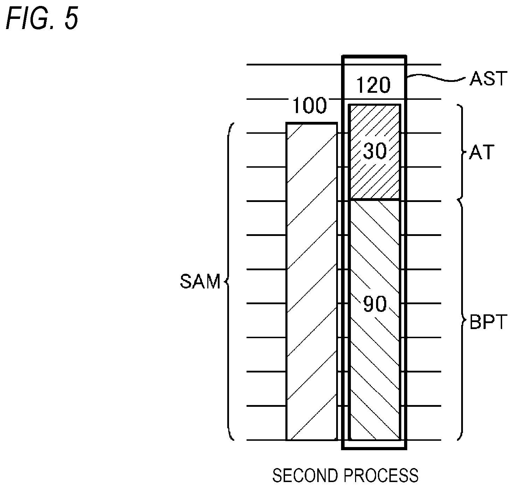

Next, processing of the management device 3 will be described. FIG. 4 is a schematic diagram illustrating an example of a performance screen 40 according to the embodiment. FIG. 5 is a diagram illustrating display modes of the performance screen 40.

The output unit 14 can output the performance information 33 to the display device 4. In the embodiment, as illustrated in FIG. 4, the output unit 14 outputs the performance screen 40 to the display device 4. The performance screen 40 illustrated in FIG. 4 displays the standard allotted minutes SAM and the actual standard time AST, which is the sum of the basic processing time BPT and the allowance time AT, in a graph format. In the example of FIG. 4, the output unit 14 displays the standard allotted minutes SAM and the actual standard time AST adjacently in a bar graph format on the performance screen 40.

In FIG. 4, the output unit 14 outputs the standard allotted minutes SAM and the actual standard time AST for each process. In FIG. 4, a vertical axis represents time, and a horizontal axis represents the type of process. In the embodiment, the calculation unit 13 calculates the basic processing time BPT and the allowance time AT for each process based on the process information 32. Accordingly, the output unit 14 outputs the standard allotted minutes SAM and the actual standard time AST calculated for each process. In the example of FIG. 4, a pair of the standard allotted minutes SAM and the actual standard time AST is displayed for each of the first process, the second process, the third process, a fourth process, and a fifth process. The administrator can collectively grasp the relationship between the standard allotted minutes SAM and the actual standard time AST for each process.

As illustrated in FIG. 5, the standard allotted minutes SAM and the actual standard time AST are displayed adjacently for one process.

The standard allotted minutes SAM serve as a time set as "a time obtained by adding an allowance time to a time required for work when a worker having a standard proficiency level performs work under a standard work procedure, method, and work condition". The standard allotted minutes SAM serve as a target value (ideal value) calculated under conditions set in the production management.

The actual standard time AST is an actual value calculated by statistical processing from the operation information 31 collected over a certain period of time. The actual standard time AST is defined by the sum of the basic processing time BPT and the allowance time AT.

The basic processing time BPT is a time during which the operator actually performs sewing on the workpiece. That is, the basic processing time BPT corresponds to the time required for the operation and driving of the sewing machine 2.

The allowance time AT is a work interruption time during which the operator interrupts the sewing work during the execution of the process. The allowance time AT is classified into, for example, an allowance time based on an equipment factor, an allowance time based on an operation-related factor, and an allowance time based on a human factor according to an occurrence factor. The allowance time based on the equipment factor includes a time caused by component replacement of the sewing machine 2, needle replacement, thread replenishment, and the like. The allowance time based on the operation-related factor includes a time caused by waiting for replenishment of a workpiece (fabric) as a target of the sewing work, an overall activity (cleaning, morning meeting, and the like) in a factory, and the like. The allowance time based on the human factor includes an interruption time and a rest time due to a physiological phenomenon of the operator engaged in the sewing process, and the like.

Therefore, the actual standard time AST, which is the sum of the basic processing time BPT and the allowance time AT, represents the actual value corresponding to the standard allotted minutes SAM. By comparing the height of a graph of the standard allotted minutes SAM with the height of a graph of the actual standard time AST, the administrator can visually and easily grasp a degree of the actual value of the actual standard time AST with respect to the set standard allotted minutes SAM.

In the embodiment, the output unit 14 outputs the performance screen 40 in which the display modes of the standard allotted minutes SAM, the basic processing time BPT, and the allowance time AT are differentiated from each other in an identifiable manner. In the example of FIG. 5, the output unit 14 makes display colors of the standard allotted minutes SAM, the basic processing time BPT, and the allowance time AT different from each other. In FIG. 5, differences in the display colors are represented by a difference in hatching. In one example, the bar graph of the standard allotted minutes SAM is gray (achromatic color), the bar graph of the basic processing time BPT is blue, and the bar graph of the allowance time AT is light blue. By making the display colors different in this way, the administrator can grasp the breakdown of the basic processing time BPT and the allowance time AT constituting the actual standard time AST. The actual standard time AST can be grasped from the overall height of the bar graph including the basic processing time BPT and the allowance time AT.

In the example of FIG. 5, the output unit 14 displays, on the performance screen 40, numerical information of each of the standard allotted minutes SAM, the basic processing time BPT, the allowance time AT, and the actual standard time AST together with the graph. In the example of FIG. 5, it can be seen from the numerical information that the standard allotted minutes SAM is "100 (seconds)", the basic processing time BPT is "90 (seconds)", the allowance time AT is "30 (seconds)", and the actual standard time AST is "120 (seconds)". The numerical information in FIG. 5 is set for convenience of illustration and does not match that in FIG. 4.

Next, the calculation of the actual standard time AST will be described.

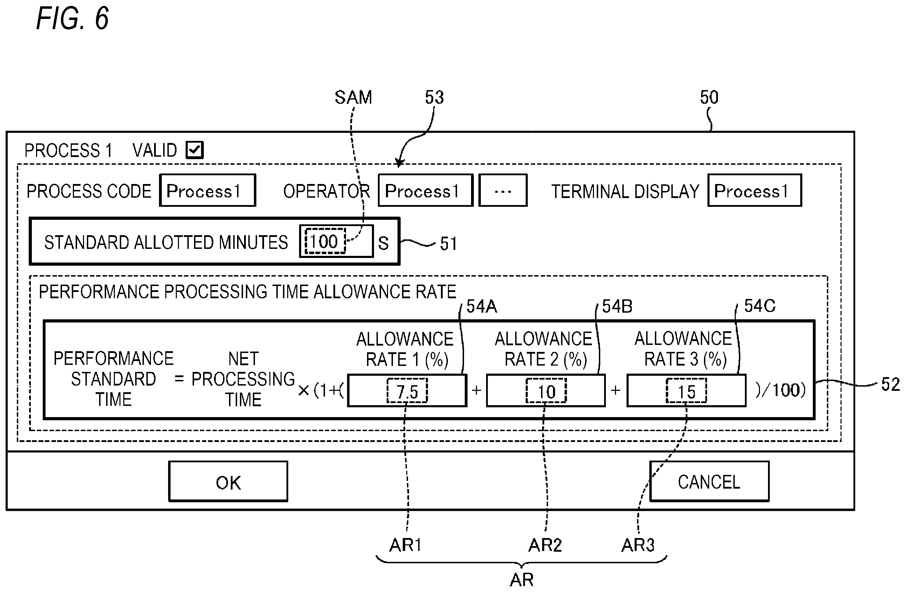

First, the settings for the standard allotted minutes SAM and the allowance rate AR will be described. FIG. 6 is a diagram illustrating a setting screen 50 of the allowance rate AR and the standard allotted minutes SAM. The setting unit 12 receives the settings for the allowance rate AR and the standard allotted minutes SAM via the setting screen 50 illustrated in FIG. 6. The setting screen 50 is output to the display device 4 by the output unit 14.

The setting screen 50 includes a first input area 51 for receiving an input of the standard allotted minutes SAM, a second input area 52 for receiving an input of the allowance rate AR, and a process selection area 53 for selecting a process for setting the standard allotted minutes SAM and the allowance rate AR. By selecting the process to be set in the process selection area 53, the setting unit 12 can receive the settings for the standard allotted minutes SAM and the allowance rate AR for each process executed by the sewing machine 2.

The setting value (seconds) of the standard allotted minutes SAM can be input to the first input area 51. In the example of FIG. 6, "100 (seconds)" is set. A setting value (seconds) of the allowance rate AR can be input to the second input area 52. In the embodiment, the setting unit 12 receives the settings for a plurality of types of allowance rates AR, and the calculation unit 13 calculates the allowance time AT based on each of the plurality of types of allowance rates AR and the basic processing time BPT.

Specifically, the plurality of types of allowance rates AR include a first allowance rate AR1 based on the equipment factor, a second allowance rate AR2 based on the operation-related factor, and a third allowance rate AR3 based on the human factor. The first allowance rate AR1 indicates the ratio of the allowance time based on the above-described equipment factor. The second allowance rate AR2 indicates the ratio of the allowance time based on the above-described operation-related factor. The third allowance rate AR3 indicates the ratio of the allowance time based on the above-described human factor. The setting unit 12 can separately set the values of the first allowance rate AR1, the second allowance rate AR2, and the third allowance rate AR3. Therefore, the second input area 52 is provided with an input field 54A for the first allowance rate AR1, an input field 54B for the second allowance rate AR2, and an input field 54C for the third allowance rate AR3. The user such as the administrator uses the input device 5 to input the values of the first allowance rate AR1, the second allowance rate AR2, and the third allowance rate AR3 to the input field 54A, the input field 54B, and the input field 54C, respectively, according to work conditions and labor conditions of the sewing factory. In the example of FIG. 6, "7.5 (%)", "10 (%)", and "15 (%)" are set as the first allowance rate AR1, the second allowance rate AR2, and the third allowance rate AR3, respectively.

The calculation unit 13 calculates the allowance time AT based on the allowance rate AR and the basic processing time BPT received by the setting unit 12. The actual standard time AST is calculated by the following Equation (1). $\begin{matrix}actual standard time \\ = basic processing time + allowance time \\ = basic processing time \times \left\{1+\left(\begin{matrix}fist allowance rate + second allowance rate + third \\ allowance rate\end{matrix}\right)/100\right\}\end{matrix}$ (1)

In Equation (1), in a case where it is not necessary to consider any of the allowance rates, the field may be left blank or "0" may be input in the input field 54A, the input field 54B, and the input field 54C.

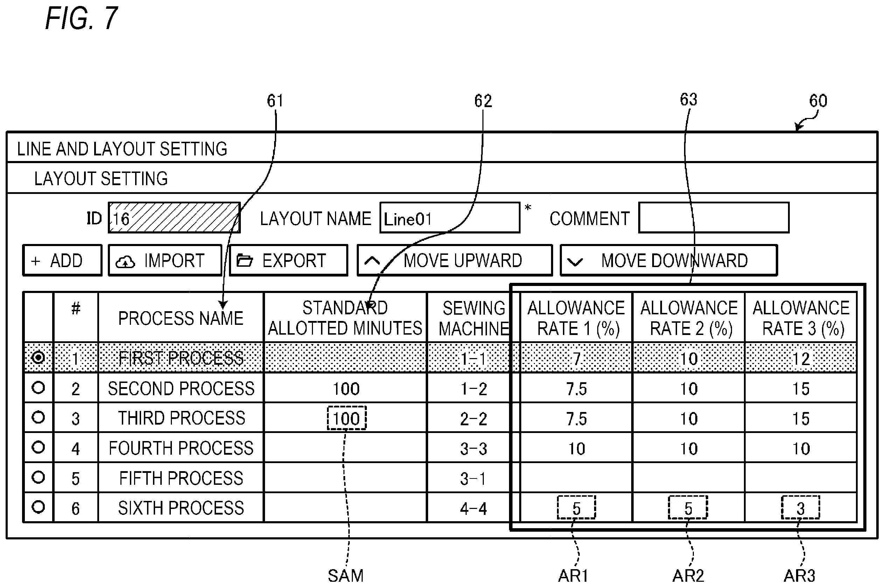

FIG. 7 is a diagram illustrating a setting display screen 60 that displays setting contents for each process. The setting unit 12 outputs the setting display screen 60 to the display device 4 by the output unit 14 in response to an operation from the user. The setting display screen 60 is a screen that displays a list of setting contents for each process received by the setting screen 50. In the example of FIG. 7, the setting display screen 60 displays the list of setting contents in a table format (matrix format). The setting display screen 60 includes a process display column 61, a first setting display column 62, and a second setting display column 63.

In the process display column 61, the name of each process set as the process information 32 is displayed. In the example of FIG. 7, each process from the first process to a sixth process is displayed. The first setting display column 62 displays the setting value of the standard allotted minutes SAM for each process. The second setting display column 63 displays the setting value of the allowance rate AR for each process. The second setting display column 63 includes a display column of the first allowance rate AR1, a display column of the second allowance rate AR2, and a display column of the third allowance rate AR3.

With the setting display screen 60, the user such as the administrator can list the setting contents of the standard allotted minutes SAM and the allowance rate AR for each process.

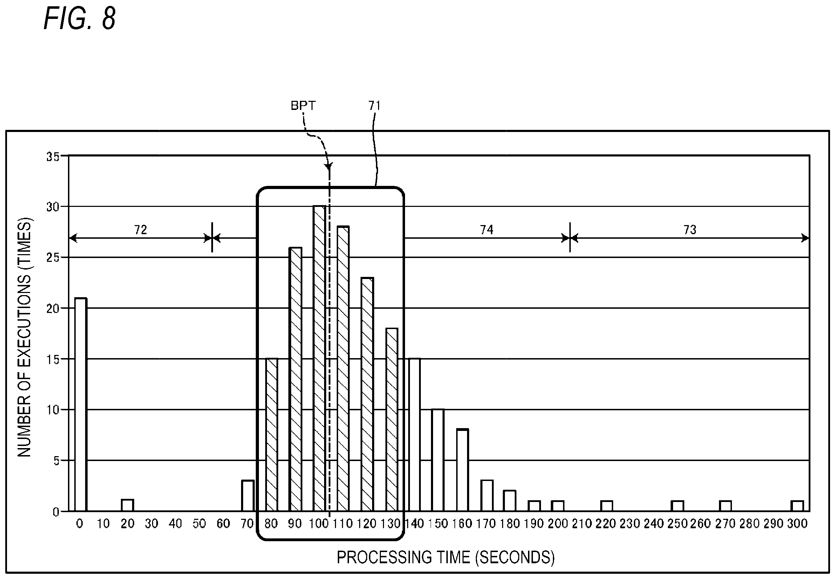

Next, calculation of the basic processing time BPT will be described. FIG. 8 is a graph for illustrating a method of calculating the basic processing time BPT. In the graph of FIG. 8, a vertical axis represents the number of executions (times) of the sewing process, that is, the number of sewn products processed in any one of the processes. In the graph of FIG. 8, a horizontal axis represents the processing time (seconds) taken to execute the sewing process, and the processing time is divided at predetermined time intervals (10-second intervals). That is, the graph of FIG. 8 represents a frequency distribution of the number of executions of the process for each processing time section. For example, in the graph of FIG. 8, it can be seen that about 30 times of the total number of times of execution of a certain process in a certain period of time are completed in the processing time in a section from 100 seconds to 110 seconds.

As described above, the calculation unit 13 of the management device 3 calculates the processing time based on the operation information 31 acquired from each sewing machine 2. The processing time is calculated based on the input data of the operation switch 6 or the operation data of the thread cutting mechanism.

The calculation unit 13 calculates the basic processing time BPT based on the distribution of the processing time calculated from the operation information 31 acquired by the information acquisition unit 11. First, the calculation unit 13 excludes outliers in the graph from calculation. For example, the calculation unit 13 excludes data belonging to a section of 0 seconds to 10 seconds from the calculation. The data belonging to the section of 0 seconds to 10 seconds corresponds to, for example, a case where the operator unintentionally inputs (mistakenly inputs) the operation switch 6 repeatedly. Next, the calculation unit 13 excludes data belonging to ranges (a range 72 and a range 73) deviating from a mode value of the processing time by a certain amount or more from the calculation. For example, the range 72 is a range α times or less the mode value of the processing time (α < 1). The range 73 is a range β times or more the mode value of the processing time (β < 1). The exclusion of the data belonging to the range 72 and the range 73 is performed in order to exclude cases where the processing time becomes significantly longer due to work time such as meetings, supporting other operators, replenishing or replacing parts in the sewing machine 2 (that is, time equivalent to the allowance time AT), or cases where the operation switch 6 is re-input in order to start the process again. The calculation unit 13 further extracts data belonging to the range 71 based on the frequency distribution of the processing time from the remaining range 74. The range 71 based on the frequency distribution is, for example, a range of ±1σ (σ being a standard deviation) from an average value of the data belonging to the range 74. Accordingly, data whose processing time has become longer or shorter due to some irregular factors is excluded.

The calculation unit 13 calculates an average value of the data belonging to the range 71 as the basic processing time BPT. The setting values (α, β, ±1σ) of the range 71, the range 72, and the range 73 are not limited to the above-described example. The range 71, the range 72, and the range 73 are determined as statistically appropriate ranges in consideration of data of a large number of processing times and circumstances of the sewing work. The calculation unit 13 calculates the allowance time AT based on the basic processing time BPT and the allowance rate AR obtained in this way, and calculates the actual standard time AST from the allowance time AT and the basic processing time BPT.

### (Operation)

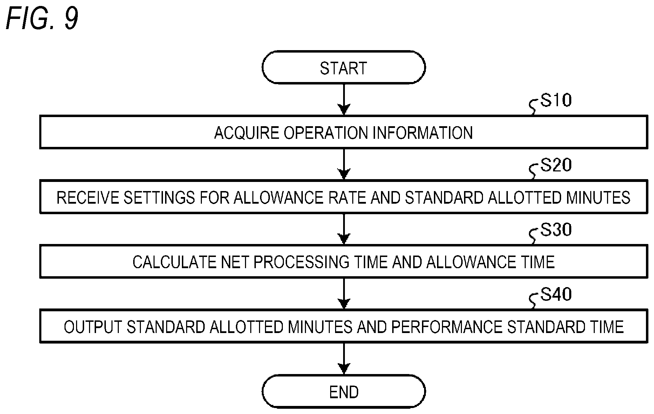

FIG. 9 is a flowchart illustrating an operation of the management device 3 according to the embodiment.

The management device 3 acquires the operation information 31 for calculating the basic processing time BPT from the sewing machine 2 (step S10). Specifically, the information acquisition unit 11 acquires the operation information 31 from each sewing machine 2 by communication via the network NW. The information acquisition unit 11 acquires the operation information 31 as temporal data over a certain period of time and records the operation information 31 in the storage device 10B.

The management device 3 receives settings for the allowance rate AR with respect to the basic processing time BPT and for the standard allotted minutes SAM (step S20). Specifically, the setting unit 12 causes the output unit 14 to display the setting screen 50 on the display device 4, and receives the input of the setting values of the allowance rate AR and the standard allotted minutes SAM via the input device 5. The setting unit 12 receives, on the setting screen 50, input of the setting value of the standard allotted minutes SAM and the setting values of the allowance rates AR (the first allowance rate AR1, the second allowance rate AR2, and the third allowance rate AR3) for each process. The setting unit 12 records the received setting values in the storage device 10B.

Steps S10 and S20 are preparation stages for calculating the performance information 33 (the basic processing time BPT, the allowance time AT, and the actual standard time AST), and an execution order is any order. Step S20 may be executed as an initial setting before step S10. The input of the setting values in step S20 may be received only once unless the administrator and the like changes the settings.

The management device 3 calculates the basic processing time BPT and the allowance time AR (step S30). Specifically, the calculation unit 13 calculates the basic processing time BPT by the method illustrated in FIG. 8 based on the operation information 31. Then, the calculation unit 13 calculates the allowance time AR by Equation (1) based on the basic processing time BPT and the setting values of the allowance rates AR (the first allowance rate AR1, the second allowance rate AR2, and the third allowance rate AR3). The calculation unit 13 calculates the basic processing time BPT and the allowance time AR for each process from the operation information 31 for each process.

The management device 3 outputs the standard allotted minutes SAM and the actual standard time AST, which is the sum of the basic processing time BPT and the allowance time AT (step S40). Specifically, the output unit 14 outputs the performance screen 40 including the standard allotted minutes SAM and the actual standard time AST to the display device 4. The performance screen 40 is presented to the user such as the administrator by the display device 4. The output unit 14 may transmit the data of the performance screen 40 to a designated transmission destination via the interface 10C and the network NW. The transmission destination can be, for example, an information terminal (a tablet terminal, a smartphone, a personal computer, and the like) used by the administrator. Accordingly, the administrator can easily compare the standard allotted minutes SAM with the actual standard time AST at a glance.

### [Effects]

As described above, the sewing management system 1 according to the embodiment is the sewing management system 1 that manages the production of the workpiece using the sewing machine 2, and includes the sewing machine 2 and the management device 3 that manages the sewing machine 2, and the management device 3 includes the information acquisition unit 11 that acquires the operation information 31 for calculating the basic processing time BPT from the sewing machine 2, the setting unit 12 that receives the settings for the allowance rate AR with respect to the basic processing time BPT and for the standard allotted minutes SAM, the calculation unit 13 that calculates the basic processing time BPT and the allowance time AT based on the operation information 31 and the allowance rate AR, and the output unit 14 that outputs the standard allotted minutes SAM and the actual standard time AST, which is the sum of the basic processing time BPT and the allowance time AT.

According to the embodiment, the actual standard time AST, which is the actual value corresponding to the standard allotted minutes SAM, is obtained as the sum of the basic processing time BPT and the allowance time AT by calculating the basic processing time BPT and the allowance time AT based on the operation information 31 and the allowance rate AR. By outputting the standard allotted minutes SAM and the actual standard time AST, the user such as the administrator can compare both the standard allotted minutes SAM with the actual actual value of the sewing operation (actual standard time AST) on the display device 4 or the information terminal. Accordingly, the sewing management system 1 that can easily compare the standard allotted minutes SAM with the actual value (actual standard time AST) is provided.

In the embodiment, the setting unit 12 receives the settings for the plurality of types of allowance rates AR, and the calculation unit 13 calculates the allowance time AT based on each of the plurality of types of allowance rates AR and the basic processing time BPT. Accordingly, the allowance rate AR can be set for each occurrence factor of the allowance time AT. In the embodiment, the plurality of types of allowance rates AR include the first allowance rate AR1 based on the equipment factor, the second allowance rate AR2 based on the operation-related factor, and the third allowance rate AR3 based on the human factor. Accordingly, this allows for detailed settings of the allowance rates AR by classifying the allowance rates AR into the equipment factor, the operation-related factor, and the human factor.

In the embodiment, the information acquisition unit 11 further acquires the process information 32 indicating the process executed by the sewing machine 2, the calculation unit 13 calculates the basic processing time BPT and the allowance time AT for each process based on the process information 32, and the output unit 14 outputs the standard allotted minutes SAM and the actual standard time AST for each process. Accordingly, the administrator can compare the standard allotted minutes SAM with the actual value (actual standard time AST) for each sewing process, and thus can provide an index when evaluating or improving productivity for each process with the above configuration.

In the embodiment, the output unit 14 outputs, to the display device 4, the performance screen 40 that displays the standard allotted minutes SAM and the actual standard time AST, which is the sum of the basic processing time BPT and the allowance time AT, in the graph format. Accordingly, it is possible to easily compare the standard allotted minutes SAM with the actual value (actual standard time AST) at a glance. Further, in the embodiment, the output unit 14 outputs the performance screen 40 in which the display modes of the standard allotted minutes SAM, the basic processing time BPT, and the allowance time AT are differentiated from each other in the identifiable manner. Accordingly, the administrator can distinguish between the basic processing time BPT and the allowance time AT and grasp them as a breakdown of the actual value of the sewing work (the actual standard time AST). Accordingly, information such as the ratio of the basic processing time BPT to the actual standard time AST can be easily grasped at a glance.

The present disclosure includes the following aspects.
(1) A sewing management system that manages production of a workpiece using a sewing machine, the sewing management system including:
   the sewing machine; and
   a management device configured to manage the sewing machine, in which
   the management device includes
      an information acquisition unit configured to acquire operation information for calculating a basic processing time from the sewing machine,
      a setting unit configured to receive settings for an allowance rate with respect to the basic processing time and for standard allotted minutes,
      a calculation unit configured to calculate the basic processing time and an allowance time based on the operation information and the allowance rate, and
      an output unit configured to output the standard allotted minutes and an actual standard time, which is a sum of the basic processing time and the allowance time.
(2) The sewing management system according to the above (1), in which
   the setting unit is configured to receive settings for a plurality of types of allowance rates, and
   the calculation unit calculates the allowance time based on each of the plurality of types of allowance rates and the basic processing time.
(3) The sewing management system according to the above (2), in which
   the plurality of types of allowance rates include a first allowance rate based on an equipment factor, a second allowance rate based on an operation-related factor, and a third allowance rate based on a human factor.
(4) The sewing management system according to any one of the above (1) to (3), in which
   the information acquisition unit further acquires process information indicating a process executed by the sewing machine,
   the calculation unit calculates the basic processing time and the allowance time for each process based on the process information, and
   the output unit outputs the standard allotted minutes and the actual standard time for each process.
(5) The sewing management system according to any one of the above (1) to (3) further including:
   a display device, in which
   the output unit outputs a performance screen that displays the standard allotted minutes and the actual standard time in a graph format to the display device.
(6) The sewing management system according to the above (5), in which
   the output unit outputs the performance screen in which display modes of the standard allotted minutes, the basic processing time, and the allowance time are differentiated from each other in an identifiable manner.

The present application is based on Japanese Patent Application No. 2024-008468 filed on January 24, 2024, the contents of which are incorporated herein by reference.

## Claims

1. A sewing management system that manages production of a workpiece using a sewing machine, the sewing management system comprising:
the sewing machine; and
a management device configured to manage the sewing machine, wherein
the management device includes
an information acquisition unit configured to acquire operation information for calculating a basic processing time from the sewing machine,
a setting unit configured to receive settings for an allowance rate with respect to the basic processing time and for standard allotted minutes,
a calculation unit configured to calculate the basic processing time and an allowance time based on the operation information and the allowance rate, and
an output unit configured to output the standard allotted minutes and an actual standard time, which is a sum of the basic processing time and the allowance time.

2. The sewing management system according to claim 1, wherein
the setting unit is configured to receive settings for a plurality of types of allowance rates, and
the calculation unit calculates the allowance time based on each of the plurality of types of allowance rates and the basic processing time.

3. The sewing management system according to claim 2, wherein
the plurality of types of allowance rates include a first allowance rate based on an equipment factor, a second allowance rate based on an operation-related factor, and a third allowance rate based on a human factor.

4. The sewing management system according to any one of claims 1 to 3, wherein
the information acquisition unit further acquires process information indicating a process executed by the sewing machine,
the calculation unit calculates the basic processing time and the allowance time for each process based on the process information, and
the output unit outputs the standard allotted minutes and the actual standard time for each process.

5. The sewing management system according to any one of claims 1 to 3 further comprising:
a display device, wherein
the output unit outputs a performance screen that displays the standard allotted minutes and the actual standard time in a graph format to the display device.

6. The sewing management system according to claim 5, wherein
the output unit outputs the performance screen in which display modes of the standard allotted minutes, the basic processing time, and the allowance time are differentiated from each other in an identifiable manner.
